(19) **Europäisches Patentamt**
**European Patent Office**
**Office européen des brevets**

(11) **EP 4 653 844 A1**

(12) **EUROPÄISCHE PATENTANMELDUNG**

(43) Veröffentlichungstag:
26.11.2025  Patentblatt 2025/48

(21) Anmeldenummer: 24177150.0

(22) Anmeldetag: **21.05.2024**

(51) Internationale Patentklassifikation (IPC):
*G01N 21/31* (2006.01)   *G06V 10/143* (2022.01)
*G01J 3/02* (2006.01)   *G01N 21/88* (2006.01)

(52) Gemeinsame Patentklassifikation (CPC):
**G01N 21/31; G06V 10/143;** G01J 3/2803;
G01N 21/314; G01N 2021/8845; G01N 2021/8887;
G01N 2201/0221; G01N 2201/1296

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **SICK AG**
**79183 Waldkirch (DE)**

(72) Erfinder:
• **DAMBACHER, Markus**
**77963 Schwanau (DE)**

• **NAZIMEK, Daniel**
**79379 Müllheim (DE)**
• **PÖLLING, Philipp**
**48727 Billerbeck (DE)**
• **SCHUMACHER, Petra**
**79211 Denzlingen (DE)**

(74) Vertreter: **Manitz Finsterwald**
**Patent- und Rechtsanwaltspartnerschaft mbB**
**Martin-Greif-Straße 1**
**80336 München (DE)**

Bemerkungen:
Geänderte Patentansprüche gemäss Regel 137(2) EPÜ.

(54) **VERFAHREN ZUM ERKENNEN EINES INTERESSIERENDEN BEREICHS IN MULTISPEKTRALEN BILDERN**

(57)   Die Erfindung betrifft ein Verfahren zum Erkennen eines interessierenden Bereichs in multispektralen Bildern eines Zielobjektes in einem industriellen Prozess und eine Vorrichtung, welche dazu ausgebildet ist, das Verfahren auszuführen. Das Verfahren beinhaltet die Schritte: Auswählen einer Reihe von Wellenlängenbereichen, wobei die Reihe von Wellenlängenbereichen zumindest einen ersten Wellenlängenbereich und einen zweiten Wellenlängenbereich umfasst, der sich von dem ersten Wellenlängenbereich unterscheidet, wobei ein Intensitätsunterschied zwischen dem interessierenden Bereich und dem Zielobjekt in dem ersten Wellenlängenbereich minimiert ist und der Intensitätsunterschied zwischen dem interessierenden Bereich und dem Zielobjekt in dem zweiten Wellenlängenbereich maximiert ist, wobei der Intensitätsunterschied zwischen dem interessierenden Bereich und dem Zielobjekt in einem Wellenlängenbereich bevorzugt definiert ist durch den Unterschied im Spektrum des interessierenden Bereichs und des Zielobjektes innerhalb des Wellenlängenbereichs; Aufnehmen eines ersten Bildes des Zielobjektes in dem ersten Wellenlängenbereich; Aufnehmen eines zweiten Bildes des Zielobjektes in dem zweiten Wellenlängenbereich; Vergleichen des ersten und des zweiten Bildes des Zielobjekts, um zumindest ein Unterscheidungsmerkmal zwischen den Bildern des Zielobjektes zu identifizieren; und Erkennen des interessierenden Bereichs, basierend auf dem identifizierten zumindest einen Unterscheidungsmerkmal.

**Beschreibung**

Die Erfindung betrifft ein Verfahren zum Erkennen eines interessierenden Bereichs in multispektralen Bildern eines Zielobjektes in einem industriellen Prozess.

Multispektrale Bildgebungsverfahren werden in industriellen Prozessen oft zur Qualitätskontrolle eingesetzt, um beispielsweise Fremdkörper auf Produkten zu identifizieren oder die Güte von Materialverbindungen wie Klebeflächen zu überprüfen. Bei derartigen automatisieren Verfahren werden in verschiedenen beschränkten Wellenlängenbereichen aufgenommene Bilder eines Produktes auf Unterschiede hin untersucht, die sich aus Unterschieden im Spektrum eines Zielobjektes, d.h. dem Produkt, und eines interessierenden Bereichs, beispielsweise einem Fremdkörper auf dem Zielobjekt oder einem fehlerhaften Bereich des Zielobjektes, ergeben. Der interessierende Bereich kann also sowohl durch ein separates Objekt als auch durch eine Struktur des Zielobjektes selbst gebildet sein. Die Beschränkung der Wellenlängenbereiche kann aktiv oder auch passiv erfolgen. Bei aktiven multispektralen Verfahren wird das Zielobjekt sequentiell mit Licht beleuchtet, welches jeweils in geeigneter Weise auf einen bestimmten Wellenlängenbereich eingeschränkt wurde. Dahingegen kann das Zielobjekt bei passiven multispektralen Verfahren durch weißes Licht beleuchtet werden, wobei die Einschränkung auf einen bestimmten Wellenlängenbereich aufnahmeseitig in der Aufnahmeeinrichtung erfolgt, beispielsweise mittels geeigneter Filterelemente oder geeigneter Einschränkungen der spektralen Empfindlichkeit der Aufnahmeeinrichtung.

Die Auswahl der jeweiligen Wellenlängenbereiche erfolgt bisher vor allem durch Versuch und Irrtum, wobei verschiedenste Kombinationen von Aufnahmeeinrichtung, Beleuchtung, Wellenlängenbereich und der Produktprobe untersucht werden, um eine möglichst gute Unterscheidung zwischen den verschiedenen Bestandteilen, d.h. zwischen dem Zielobjekt und dem interessierenden Bereich, in den Bildern der Produktprobe zu erhalten. Um eine Lösung für eine spezifische Anwendung zu finden, werden daher typischerweise mehrere Iterationen mit verschiedenen Beleuchtungs- und Aufnahmeeinrichtungen durchgeführt. Derartige Machbarkeitsstudien erfordern einen erheblichen Arbeitsaufwand, nehmen viel Zeit in Anspruch, sind teuer und lösen oft nicht den jeweiligen Anwendungsfall.

So passt die spektrale Empfindlichkeit der als Lösung gewählten Beleuchtungs- oder Aufnahmeeinrichtungen oft nicht zur Anwendung. Das kann beispielsweise darin begründet sein, dass multispektrale Beleuchtungseinrichtungen üblicherweise standardmäßige LED Produkte beinhalten, die Licht in einem breiten Wellenlängenbereich emittieren. Scharfe Details im Bereich zwischen 10nm und 30nm im Spektrum des interessierenden Bereichs können somit bei Bedarf nicht aufgelöst werden, wodurch bestimmte spektrale Merkmale nicht richtig erkannt werden können. Das Emissionsverhalten von LEDs ist zudem temperaturabhängig, was die Genauigkeit der gefundenen Lösung weiter vermindern kann. Standardmäßige LED Produkte weisen produktionsseitig oft auch eine größere Variation bei Kenngrößen wie der zentralen Wellenlänge auf und verfügen somit oft nicht über die erforderliche Genauigkeit und Güte.

Anbieter von Beleuchtungseinrichtungen bieten darüber hinaus im Allgemeinen keine Hilfe bei der Suche nach geeigneten Wellenlängenbereichen an, sondern liefern lediglich Standardprodukte. Die Auswahl von Beleuchtungseinrichtungen passt somit oft hinsichtlich der Wellenlänge nicht sehr gut zur chemischen Zusammensetzung der untersuchten Produktprobe.

Zudem sind bei passiven multispektralen Verfahren Filter in der Regel an den Aufnahmeeinrichtungen oder Multispektralkameras fest installiert, wobei der Austausch der Filter sehr kostspielig ist. Verfahren, bei denen Bilder in verschiedenen spektralen Kanälen gleichzeitig aufgenommen werden, haben zudem das Problem, dass die Anzahl von Filterelementen im Filter nicht beliebig erhöht werden kann, da eine zunehmende Anzahl von Filterelementen die Auflösung der aufgenommenen Bilder beschränkt. In sequentiell arbeitenden Verfahren, bei denen die Aufnahme der Bilder in verschiedenen Wellenlängen nacheinander erfolgt, wirkt sich dagegen die relativ langsame Reaktionszeit nachteilig aus, die sich beispielsweise sich aus einem mechanischen Wechsel der Filterelemente ergeben kann.

Neben multispektralen Verfahren können im Prinzip auch hyperspektrale Verfahren zur Objekterkennung und Qualitätskontrolle in industriellen Prozessen eingesetzt werden. Unter hyperspektralen Bildern werden Bilder verstanden, welche eine deutlich höhere spektrale Auflösung besitzen als multispektrale Bilder. Vorrichtungen zur Aufnahme von hyperspektralen Bildern sind jedoch kostspielig, schwierig zu bedienen und erfordern umfassende Kenntnisse zur Auswertung der hyperspektralen Datenpakete welche die räumlichen und spektralen Objektdaten umfassen. Eine Auswertung der Datenpakete erfolgt deshalb im Allgemeinen durch spezifische Bildverarbeitungsprogramme. Dagegen sind standardgemäße Bildverarbeitungsprogramme weniger geeignet, die Information von Hyperspektralaufnahmen auszuwerten. Da zusätzlich auch Beleuchtungsquellen für die hyperspektrale Bildgebung für viele industrielle Anwendungen noch nicht verfügbar sind, sind hyperspektrale Verfahren zur Objekterkennung in industriellen Prozessen trotz ihrer prinzipiellen Eignung problembehaftet, kostspielig und aufwändig in der Durchführung.

Es ist daher eine Aufgabe der Erfindung, ein verbessertes Verfahren anzugeben, welches ein einfacheres, effizienteres, genaueres und kostengünstigeres Erkennen des interessierenden Bereichs eines Zielobjektes ermöglicht.

Die Aufgabe wird in einem ersten Aspekt der Erfindung durch ein Verfahren mit den Merkmalen des Anspruchs 1 gelöst, und insbesondere dadurch, dass das Verfahren die Schritte beinhaltet: Auswählen einer Reihe von Wellenlängenbereichen, wobei die Reihe von Wellenlängenbereichen zumindest einen ersten Wellenlängenbereich und einen zweiten Wellenlängenbereich umfasst, der sich von dem ersten Wellenlängenbereich unterscheidet, wobei ein Intensitätsunterschied zwischen dem interessierenden Bereich und dem Zielobjekt in dem ersten Wellenlängenbereich minimiert ist und der Intensitätsunterschied zwischen dem interessierenden Bereich und dem Zielobjekt in dem zweiten Wellenlängenbereich maximiert ist, wobei der Intensitätsunterschied zwischen dem interessierenden Bereich und dem Zielobjekt in einem Wellenlängenbereich bevorzugt definiert ist durch den Unterschied im Spektrum des interessierenden Bereichs und des Zielobjektes innerhalb des Wellenlängenbereichs; Aufnehmen eines ersten Bildes des Zielobjektes in dem ersten Wellenlängenbereich; Aufnehmen eines zweiten Bildes des Zielobjektes in dem zweiten Wellenlängenbereich; Vergleichen des ersten und des zweiten Bildes des Zielobjekts, um zumindest ein Unterscheidungsmerkmal zwischen den Bildern des Zielobjektes zu identifizieren; und Erkennen des interessierenden Bereichs, basierend auf dem identifizierten zumindest einen Unterscheidungsmerkmal.

Die Auswahl der Wellenlängenbereiche erfolgt über einen Vergleich der Intensitätsunterschiede für eine Vielzahl von Wellenlängenbereichen, wobei der Unterschied zwischen den Intensitätsunterschieden zwischen den Wellenlängenbereichen maximiert wird. Bei den Intensitätsunterschieden in den Wellenlängenbereichen kann es sich insbesondere um den jeweiligen Spektralkontrast in den jeweiligen Wellenlängenbereichen handeln. Das Maximieren der Intensitätsunterschiede zwischen den Wellenlängenbereichen (bzw. das oben genannte Minimieren und Maximieren) kann insbesondere so verstanden werden, dass der Intensitätsunterschied in dem zweiten Wellenlängenbereich größer ist, als in dem ersten Wellenlängenbereich, bevorzugt 2, 4, 10 oder 50 Mal größer. Alternativ kann für einen bekannten Wellenlängenbereich, in welchem das Spektrum für das Zielobjekt und den interessierenden Bereich bekannt ist, jeweils der Bereich mit dem tatsächlich minimalen Intensitätsunterschied als erster Wellenlängenbereich und der Bereich mit dem tatsächlich maximalen Intensitätsunterschied als zweiter Wellenlängenbereich gewählt werden.

Die Ermittlung der jeweiligen Intensitätsunterschiede in einem Wellenlängenbereich kann beispielsweise bei Beleuchtung des Zielobjektes und des interessierenden Bereichs mit weißem Licht erfolgen. Der Intensitätsunterschied zwischen dem interessierenden Bereich und dem Zielobjekt in einem Wellenlängenbereich ist insbesondere definiert durch den Unterschied der jeweiligen spektralen Transmissions- beziehungsweise Reflexionsgrade des interessierenden Bereichs und des Zielobjektes innerhalb des Wellenlängenbereichs. Unter einem Wellenlängenbereich wird im Rahmen dieser Anmeldung ein zusammenhängender Bereich verstanden, der beispielweise durch eine zentrale Wellenlänge und eine Halbwertsbreite gekennzeichnet ist.

Die Wellenlängenbereiche können auch derart ausgewählt werden, dass ein normierter Intensitätsunterschied zwischen dem Zielobjekt und dem interessierenden Bereich in den jeweiligen Wellenlängenbereiche jeweils minimiert und maximiert wird, wobei der normierte Intensitätsunterschied zwischen dem Zielobjekt und dem interessierenden Bereich in einem Wellenlängenbereich definiert ist durch den auf die Breite des Wellenlängenbereichs normierten Absolutwert des Unterschieds der jeweiligen spektralen Transmissions- bzw. Reflexionsgrade des interessierenden Bereichs und des Zielobjektes innerhalb des Wellenlängenbereichs.

Die Auswahl der Wellenlängenbereiche kann durch einen Vergleich der Intensitätsunterschiede zwischen dem Zielobjekt und dem interessierenden Bereich für verschiedene Wellenlängenbereiche innerhalb der für eine Aufnahme zugänglichen Wellenlängengrenzen erfolgen, wobei beliebige Kombinationen von Wellenlängenbereichen möglich sind. Die Wellenlängenbereiche können hierbei gleiche oder unterschiedliche Breiten, beispielsweise ausgedrückt durch ihre jeweiligen Halbwertsbreiten, aufweisen. Als Datenbasis für die Intensitätsunterschiede können insbesondere Literaturdaten oder Bilddaten dienen.

Lassen sich keine Wellenlängenbereiche identifizieren, die einem maximalen bzw. minimalen Intensitätsunterschied entsprechen, beispielsweise weil die Intensitätsunterschiede über den gesamten Bereich der zugänglichen Wellenbereichsgrenzen ähnliche Werte aufweisen, so können ein erster und zweiter Wellenlängenbereich derart ausgewählt werden, dass der erste Intensitätsunterschied des ersten Wellenlängenbereichs kleiner ist als der zweite Intensitätsunterschied des zweiten Wellenlängenbereichs.

Die Auswahl der Wellenlängenbereiche kann durch Algorithmen, Neuronale Netzwerke oder Support Vector Machines (SVM) unterstützt werden.

Das erste Bild wird in einem Wellenlängenbereich mit einem minimalen Intensitätsunterschied zwischen dem Zielobjekt und dem interessierenden Bereich aufgenommen. Das Zielobjekt und der interessierende Bereich erscheinen somit in dem ersten Bild mit vergleichbarer Intensität. Dagegen wird das zweite Bild in einem Wellenlängenbereich mit einem maximalen Intensitätsunterschied zwischen dem Zielobjekt und dem interessierenden Bereich aufgenommen. Der Unterschied in den Spektren des Zielobjektes und des interessierenden Bereichs führt dazu, dass in dem zweiten Bild das Zielobjekt und der interessierende Bereich mit maximal unterschiedlicher Intensität erscheinen. Zwischen dem ersten Bild und dem zweiten Bild bildet sich somit zumindest ein Unterscheidungsmerkmal aus, das durch ein Vergleichen des ersten und zweiten Bildes identifizierbar ist. Hierbei ist das Unterscheidungsmerkmal als zusammenhängender Bereich anzusehen, in denen sich das erste und das zweite Bild unterscheiden. Unterscheiden sich voneinander getrennte Bereiche in den beiden Bildern, so werden diese Bereiche gesonderten und voneinander getrennten Unterscheidungsmerkmalen zugeordnet. Das Erkennen des interessierenden Bereichs erfolgt daraufhin auf Grundlage des identifizierten Unterscheidungsmerkmals oder der identifizierten Unterscheidungsmerkmale, welche den interessierenden Bereich klar hervortreten lassen.

Das Identifizieren der Unterscheidungsmerkmale und/oder das nachfolgende Erkennen des interessierenden Bereichs kann beispielsweise mittels Neuronaler Netzwerke oder Support Vector Machines durchgeführt werden und auch eine Klassifikation der erkannten interessierenden Bereiche miteinbeziehen.

Durch die Auswahl von Wellenlängenbereichen mit großen Intensitätsunterschieden kann der interessierende Bereich in Bildern des Zielobjektes schnell, effizient und mit großer Genauigkeit erkannt werden. Die Auswahl erfolgt gezielt und macht ein langwieriges Testen nach dem Versuch und Irrtum Prinzip unnötig, was sowohl den Zeit- als auch den Kostenaufwand vermindert. Die Zielgenauigkeit der Lösung ermöglicht ein robustes Erkennen des interessierenden Bereichs mit hoher Treffsicherheit und Robustheit. Das Verfahren verfolgt einen multispektralen Ansatz und ist damit bedeutend kostengünstiger und mit weniger Aufwand durchführbar als Verfahren, welche interessierende Bereiche in Hyperspektralbildern erkennen. Da in dem multispektralen Verfahren die Einschränkung der Wellenlängenbereiche beispielsweise beleuchtungsseitig erfolgen kann, ist aufnahmeseitig eine Einschränkung der Wellenlängenbereiche nicht zwingend erforderlich. Um das Verfahren an unterschiedliche Kombinationen von Zielobjekt und interessierendem Bereich anzupassen sind somit beleuchtungsseitige Änderungen ausreichend, während auf aufnahmeseitige Änderungen verzichtet werden kann. Mit anderen Worten kann ein und dieselbe Kamera mit ein und derselben Kamerakonfiguration zur Erkennung unterschiedlichster Kombinationen von interessierendem Bereich und Zielobjekt verwendet werden. Dies verleiht dem Verfahren eine hohe Flexibilität. Im Übrigen kann durch den Verzicht auf eine aufnahmeseitige Filterung durch Filterräder auch deren nachteilige, eher langsame Reaktionszeit vermieden werden.

Gemäß einer Ausführungsform der Erfindung entspricht zumindest ein Wellenlängenbereich der Reihe von Wellenlängenbereichen, insbesondere dessen zentrale Wellenlänge, einem spezifischen Merkmal im Reflexionsspektrum bzw. im Absorptionsspektrum des interessierenden Bereichs und/oder des Zielobjektes. Das Erkennen des interessierenden Bereichs basiert somit auf Unterschieden in der chemischen Zusammensetzung von Zielobjekt und interessierendem Bereich. Ein großer Intensitätsunterschied kann beispielsweise dadurch erreicht werden, dass das spezifische Merkmal ausschließlich in dem Reflexionsspektrum oder Absorptionsspektrum von Zielobjekt beziehungsweise interessierendem Bereich merklich ausgebildet ist, oder im Zielobjekt beziehungsweise im interessierenden Bereich viel deutlicher ausgeprägt ist als in dem anderen Bereich. Um die Stärke des Intensitätsunterschiedes zu optimieren, wird beim Auswählen der Wellenlängenbereiche die Breite des zweiten Wellenlängenbereichs vorteilhafterweise an die Breite des spezifischen Merkmals angepasst.

Gemäß einer Ausführungsform der Erfindung werden die jeweiligen Wellenlängenbereiche der Reihe von Wellenlängenbereichen mittels einer Spektralanalyse von vorangegangenen Aufnahmen, insbesondere Hyperspektralaufnahmen, des Zielobjektes und des interessierenden Bereichs ausgewählt. Das Auswählen der Wellenlängenbereiche erfolgt somit in Aufnahmen, die neben dem zweidimensionalen Abbild auch Informationen über die spektrale Zusammensetzung des aufgenommenen Objektes als dritte Dimension beinhalten. Die Hyperspektralaufnahmen besitzen eine höhere bis hohe spektrale Auflösung und ermöglichen somit ein Identifizieren von spezifischen Merkmalen im Spektrum des abgebildeten Objektes. Durch eine Analyse und einen Vergleich der aus den Hyperspektralaufnahmen extrahierten Spektren können Wellenlängenbereiche mit minimierten und maximierten Intensitätsunterschieden effizient erkannt und für das Verfahren ausgewählt werden. Hierbei werden die Hyperspektralaufnahmen ausschließlich dazu benötigt, geeignete Wellenlängenbereiche für das multispektrale Verfahren auszuwählen. Eine einzige jeweilige Hyperspektralaufnahme von dem Zielobjekt und dem interessierenden Bereich ist hierbei ausreichend, um die Wellenlängenbereiche entsprechend auszuwählen. Die Hyperspektralaufnahmen von dem Zielobjekt und dem interessierenden Bereich können separat gemacht werden. Es ist jedoch auch denkbar, dass die Spektralanalyse auf einer einzigen Hyperspektralaufnahme einer Produktprobe basiert, in der sowohl das Zielobjekt als auch der interessierende Bereich vorhanden und insbesondere sichtbar sind. Da das Verfahren auf multispektralen Aufnahmen beruht, werden Hyperspektralaufnahmen nach der Auswahl der Wellenlängenbereiche nicht mehr benötigt. Das Verfahren ermöglicht somit eine effiziente, unaufwändige und kostengünstige Erkennung des interessierenden Bereichs.

Gemäß einer Ausführungsform der Erfindung umfasst die Reihe von Wellenlängenbereichen zumindest einen dritten Wellenlängenbereich, der sich von dem ersten Wellenlängenbereich und dem zweiten Wellenlängenbereich unterscheidet, wobei der Intensitätsunterschied zwischen einem weiteren interessierenden Bereich und dem Zielobjekt in dem dritten Wellenlängenbereich maximiert ist; und das Verfahren weiterhin beinhaltet: Aufnehmen eines dritten Bildes des Zielobjektes in dem dritten Wellenlängenbereich; Vergleichen des ersten und des dritten Bildes des Zielobjektes und/oder des zweiten und des dritten Bildes des Zielobjektes, um zumindest ein weiteres Unterscheidungsmerkmal zwischen den Bildern des Zielobjektes zu identifizierten; und Erkennen des weiteren interessierenden Bereichs, basierend auf dem identifizierten zumindest einen weiteren Unterscheidungsmerkmal.

Das Verfahren ist somit nicht auf zwei Wellenlängenbereiche beschränkt. Weitere Wellenlängenbereiche mit minimiertem und maximiertem Intensitätsunterschied können entsprechend gewählt werden, um weitere interessierende Bereiche zu erkennen.

Für jeden weiteren interessierenden Bereich wird zumindest ein weiterer Wellenlängenbereich ausgewählt und ein entsprechendes Bild in dem Wellenlängenbereich aufgenommen, um den weiteren interessierenden Bereich durch einen Vergleich des ersten und des dritten Bildes zu erkennen und zu identifizieren. Falls sich der Intensitätsunterschied zwischen dem Zielobjekt und dem weiteren interessierenden Bereich in dem ersten Wellenlängenbereich vergrößert hat und nicht mehr einem Minimalwert für dieses Objektpaar entspricht, kann gegebenenfalls ein weiterer vierter Wellenlängenbereich ausgewählt werden, welcher den besagten Minimalwert entspricht und in diesem Wellenlängenbereich ein viertes Bild für den Vergleich mit dem dritten Bild aufgenommen werden. Die Auswahl der besten Kombination von Bildern für den Vergleich kann von den jeweiligen Ergebnissen des Erkennungsschrittes und einer gegebenenfalls durchgeführten Klassifikation des interessierenden Bereichs und/oder des weiteren interessierenden Bereichs abhängig gemacht werden.

Darüber hinaus ermöglicht das Verfahren eine Unterscheidung zwischen dem interessierenden Bereich und dem weiteren interessierenden Bereich. Hierzu werden vorzugsweise die Wellenlängenbereiche derart gewählt, dass der Intensitätsunterschied zwischen dem interessierenden Bereich und dem weiteren interessierenden Bereich in einem ersten Wellenlängenbereich minimiert ist, während er in einem zweiten Wellenlängenbereich maximiert ist.

Gemäß einer Ausführungsform der Erfindung erfolgt das Aufnehmen der Bilder des Zielobjektes durch eine Kamera, welche für jeden Wellenlängenbereich der Reihe von Wellenlängenbereichen sensitiv ist, insbesondere wobei die Kamera eine Breitbandkamera ist. Es wird somit nur eine einzige Kamera benötigt, um die erforderlichen Bilder aufzunehmen. Da die Kamera keine gesonderten Erfordernisse, beispielsweise hinsichtlich der Möglichkeit der Aufnahme verschiedener spektraler Kanäle, erfüllen muss, kann sie einfach ausgebildet sein.

Beispielsweise kann in dem Verfahren eine geeignete Breitbandkamera verwendet werden, um die Bilder in den verschiedenen Wellenlängenbereichen aufzunehmen.

Gemäß einer Ausführungsform der Erfindung ist zumindest eine Beleuchtungseinrichtung vorgesehen, welche das Zielobjekt während dem Aufnehmen von jeweiligen Bildern des Zielobjektes sequenziell mit Licht beleuchtet, dessen Spektrum jeweils auf einen Wellenlängenbereich der Reihe von Wellenlängenbereichen eingeschränkt ist. Mit anderen Worten wird das Zielobjekt während dem Aufnehmen des ersten Bildes mit Licht beleuchtet, dessen Spektrum dem ersten Wellenlängenbereich entspricht und während dem Aufnehmen des zweiten Bildes mit Licht beleuchtet, dessen Spektrum dem zweiten Wellenlängenbereich entspricht. Gemäß diesem aktiven multispektralen Verfahren werden die Wellenlängenbereiche somit beleuchtungsseitig eingeschränkt, während aufnahmeseitig keine Einschränkung der Wellenlängenbereiche erfolgen muss. Die beleuchtungsseitige Einschränkung der Wellenbereiche kann dadurch erreicht werden, dass die Beleuchtungseinrichtung bereits intrinsisch Licht aussendet, dessen Wellenlänge auf den jeweiligen Wellenlängenbereich eingeschränkt ist. Alternativ oder zusätzlich kann die Beleuchtungseinrichtung Filterelemente aufweisen, welche, insbesondere intrinsisch im Wesentlichen weißes, von der Beleuchtungseinrichtung ausgesendetes Licht filtern und entsprechend auf den jeweiligen Wellenlängenbereich einschränken.

Alternativ oder zusätzlich kann gemäß einer Ausführungsform der Erfindung zumindest eine Beleuchtungseinrichtung vorgesehen sein, welche das Zielobjekt während dem Aufnehmen von jeweiligen Bildern des Zielobjektes mit im Wesentlichen weißem Licht beleuchtet, wobei weiterhin eine Filtereinrichtung vorgesehen ist, welche zumindest zwei Filterelemente umfasst, die jeweils im Wesentlichen für Licht eines Wellenlängenbereichs der Reihe von Wellenlängenbereichen durchlässig und für Licht anderer Wellenlängen undurchlässig sind und das von dem Zielobjekt und von dem interessierenden Bereich reflektierte Licht derart filtern, dass das Aufnehmen der Bilder des Zielobjektes in dem jeweiligen eingeschränkten Wellenlängenbereich erfolgt. Gemäß diesem passiven multispektralen Verfahren werden die Wellenlängenbereiche somit aufnahmeseitig eingeschränkt, während beleuchtungsseitig im Wesentlichen keine Einschränkung der Wellenlängenbereiche erfolgt. Die Filtereinrichtung kann beispielsweise als Filterrad ausgebildet sein, welches eine Reihe von Filterelementen umfasst. Dabei wird das Filterrad zwischen dem Zielobjekt und der Kamera angeordnet, ein dem gewünschten Wellenlängenbereich entsprechendes Filterelement in eine für das Filtern des von den Objekten reflektierten Lichts geeignete Position gebracht und ein Bild des Zielobjektes aufgenommen. Für die Aufnahme weitere Bilder in anderen Wellenlängenbereichen wird das Filterrad entsprechend weiterbewegt, bis ein passendes Filterelement in der geeigneten Position ist. Somit können auch bei einer Beleuchtung mit weißem Licht und bei Verwendung einer Breitbandkamera sequenziell Bilder des Zielobjektes in verschiedenen Wellenlängenbereichen aufgenommen werden. Die Filtereinrichtung kann weiterhin auch als Strahlteiler ausgebildet sein, welcher richtungsabhängig nur für Licht der jeweiligen Wellenlängenbereiche durchlässig ist. Bei der Verwendung eines Strahlteilers wird für jeden Wellenlängenbereich der Reihe von Wellenlängenbereichen eine gesonderte Kamera benötigt, welche jedoch keine speziellen Erfordernisse erfüllen muss und beispielsweise wieder als Breitbandkamera ausgebildet sein kann.

Alternativ zu einer Anordnung der Filtereinrichtung vor der Kamera ist auch denkbar, dass die Filtereinrichtung ein integraler Bestandteil der Kamera ist und die Einschränkung der Wellenlängenbereiche durch Filterelemente der Kamera erfolgt. Eine Aufnahme von Bildern verschiedener Wellenlängenbereiche kann hierbei sequentiell oder gleichzeitig erfolgen, wobei bei einer gleichzeitigen Aufnahme einzelne Bildelemente des Bildes unterschiedlichen Wellenlängenbereichen zugeordnet sind.

Gemäß einer Ausführungsform der Erfindung ist eine Analyse- und/oder Steuereinrichtung vorgesehen, welche dazu ausgebildet ist, das Aufnehmen der Bilder des Zielobjektes zu steuern und/oder durch Vergleich der Bilder des Zielobjektes, insbesondere durch Bildverarbeitung, ein Unterscheidungsmerkmal zwischen den Bildern des Zielobjektes zu identifizieren und den interessierenden Bereich zu erkennen, insbesondere wobei die Analyse- und/oder Steuereinrichtung in der Kamera angeordnet ist. Insbesondere ist die Analyse- und Steuereinrichtung mit der Kamera und der Beleuchtungseinrichtung verbunden und/oder ist dazu ausgebildet, das sequentielle Beleuchten des Zielobjektes und das Aufnehmen des ersten Bildes und des zweiten Bildes zu steuern. Die Analyse- und/oder Steuereinrichtung kann somit dazu ausgebildet sein, sowohl das Aufnehmen der Bilder in unterschiedlichen Wellenlängenbereichen zu überwachen als auch die aufgenommenen Bilder zu analysieren und durch einen Vergleich der Bilder den interessierenden Bereich zu identifizieren. Die Analyse- und/oder Steuereinrichtung kann dazu ausgebildet sein, digitale Bildverarbeitungsmethoden anzuwenden, um Unterschiede zwischen zwei Bildern automatisch zu erkennen, zusammenhängende Bildbereiche mit erkannten Unterschieden zu einem Unterscheidungsmerkmal zusammenzufassen, das Unterscheidungsmerkmal zu identifizieren und den interessierenden Bereich dadurch zu erkennen. Hierzu kann die Analyse- und/oder Steuereinrichtung beispielsweise ein Neuronales Netzwerk oder eine Support Vector Machine (SVM) beinhalten.

Gemäß einer Ausführungsform der Erfindung beinhaltet das Vergleichen des ersten und zweiten Bildes das Erzeugen zumindest eines Differenzbildes und das Identifizieren des zumindest einen Unterscheidungsmerkmals erfolgt in dem Differenzbild.

Das Differenzbild kann durch Subtraktion gemäß

$$\frac{(erstes\ Bild - zweites\ Bild)}{(erstes\ Bild + zweites\ Bild)}$$

berechnet werden, wobei das erste und zweite Bild Bilder des Zielobjektes in unterschiedlichen Wellenlängenbereichen sind. Insbesondere können jeweils die Intensitäts- bzw. Helligkeitswerte in dem jeweiligen Bild miteinander verrechnet werden. Das Differenzbild weist eine Normierung auf, welche durch die Summe des ersten und zweiten Bildes gebildet ist. Da das erste Bild und das zweite Bild jeweils bei minimalen und maximalen Intensitätsunterschieden zwischen dem Zielobjekt und dem interessierenden Bereich aufgenommen wurden, tritt der interessierende Bereich in dem Differenzbild als zumindest ein Unterscheidungsmerkmal in Form einer positiven oder negativen Struktur klar hervor.

Zur automatischen Erkennung des interessierenden Bereichs in dem Differenzbild kann das Differenzbild beispielsweise einer Schwellenwertanalyse oder einer Segmentierung unterzogen werden, wodurch verschiedene Bereiche der positiven oder negativen Struktur zusammengefasst werden können.

Falls mehr als ein interessierender Bereich erkannt werden soll oder zwischen verschiedenen interessierenden Bereichen unterschieden werden soll, kann die Berechnung von Differenzbildern für alle möglichen Kombinationen von Bildern erfolgen. Eine Segmentierung oder Schwellenwertanalyse kann für alle berechneten Differenzbilder gesondert durchgeführt werden. Alternativ ist es auch möglich, mehrere berechnete Differenzbilder in einem Bild zu kombinieren, und die Segmentierung oder Schwellenwertanalyse auf diesem kombinierten Bild durchzuführen, um verschiedene interessierende Bereiche zu erkennen und/oder voneinander zu unterscheiden.

Gemäß einer Ausführungsform der Erfindung sind Halbwertsbreiten der jeweiligen Wellenlängenbereiche der Reihe von Wellenlängenbereichen gleich groß oder unterschiedlich groß, wobei die Halbwertsbreite zumindest eines der Wellenlängenbereiche der Reihe von Wellenlängenbereichen kleiner ist als 100 nm. Insbesondere kann die Halbwertsbreite des Wellenlängenbereichs, in welchem der Intensitätsunterschied minimiert ist, größer sein als die Halbwertsbreite des Wellenlängenbereichs, in welchem der Intensitätsunterschied maximiert ist. Vorteilhafterweise sind die Halbwertsbreiten an die Ausdehnung von spektralen Merkmalen im Reflexions- und/oder Absorptionsspektrum des Zielobjektes oder des interessierenden Bereichs angepasst. Durch eine derartige Anpassung kann die Größe des Intensitätsunterschieds in der Umgebung des spektralen Merkmals optimiert werden, was die Genauigkeit und Robustheit des Erkennens des interessierenden Bereichs erhöht. So kann die Halbwertsbreite zumindest eines der Wellenlängenbereiche der Reihe von Wellenlängenbereichen beispielsweise auch kleiner sein als 80nm, 60nm, 40nm, 10nm oder 5nm.

Gemäß einer Ausführungsform der Erfindung besteht der interessierende Bereich überall aus demselben Material. Dies bedeutet, dass ein einziges Wellenlängenbereichspaar mit minimiertem und maximiertem Intensitätsunterschied ausreicht, um Unterscheidungsmerkmale in jedem Bereich eines ausgedehnten interessierenden Bereichs mit einer vergleichbaren Wahrscheinlichkeit zu erkennen. Beispielsweise kann es sich bei dem interessierenden Bereich um Fremdkörper handeln, die während des Herstellungsprozesses auf ein Produkt gelangt sein können und nun im Rahmen einer Qualitätskontrolle erkannt werden sollen. Der interessierende Bereich kann beispielsweise auch eine stoffliche Verbindungskomponente sein, welche zwei Werkstoffe miteinander verbindet und im Rahmen einer Qualitätskontrolle auf die Gleichmäßigkeit und Vollständigkeit ihrer Aufbringung hin untersucht wird.

Gemäß einer Ausführungsform der Erfindung besteht das weitere interessierende Objekt aus einem anderen Material als der interessierende Bereich. Das Verfahren ermöglicht somit eine materialspezifische Qualitätskontrolle, bei welcher für die jeweiligen Materialien oder Materialkombinationen eines Produktes entsprechende Wellenlängenbereiche für die Aufnahme von Bildern ausgewählt werden und anhand der Bilder Untersuchungen der Qualität des Produktes durchgeführt werden.

Nach einem zweiten Aspekt der Erfindung wird das Problem weiterhin durch eine Vorrichtung zum Erkennen eines interessierenden Bereichs mittels, beispielsweise multispektraler, Bildgebung in einem industriellen Prozess gelöst, wobei die Vorrichtung dazu ausgebildet ist, die folgenden Schritte auszuführen: Aufnehmen eines ersten Bildes eines Zielobjektes in einem ersten Wellenlängenbereich; Aufnehmen zumindest eines zweiten Bildes des Zielobjektes in zumindest einem zweiten Wellenlängenbereich, der sich vom ersten Wellenlängenbereich unterscheidet, wobei ein Intensitätsunterschied zwischen dem interessierenden Bereich und dem Zielobjekt in einem Wellenlängenbereich bevorzugt definiert ist durch den Unterschied im Spektrum des interessierenden Bereichs und des Zielobjektes, wobei der Intensitätsunterschied zwischen dem interessierenden Bereich und dem Zielobjekt in dem ersten Wellenlängenbereich minimiert ist und der Intensitätsunterschied zwischen dem interessierenden Bereich und dem Zielobjekt in dem zweiten Wellenlängenbereich maximiert ist; Vergleichen des ersten und des zweiten Bildes des Zielobjektes, um zumindest ein Unterscheidungsmerkmal zwischen den Bildern des Zielobjektes zu identifizieren; und Erkennen des interessierenden Bereichs, basierend auf dem identifizierten zumindest einen Unterscheidungsmerkmal.

Gemäß einer Ausführungsform des zweiten Aspekts der Erfindung umfasst die Vorrichtung weiterhin eine Kamera, insbesondere Breitbandkamera, welche in dem ersten und dem zweiten Wellenlängenbereich sensitiv ist und dazu ausgebildet ist, das erste Bild und das zweite Bild des Zielobjektes aufzunehmen; zumindest eine Beleuchtungseinrichtung, welche dazu ausgebildet ist, das Zielobjekt mit im Wesentlichen weißen Licht und/oder sequentiell mit Licht zu beleuchten, dessen Spektrum jeweils auf den ersten und den zweiten Wellenlängenbereich eingeschränkt ist; und eine Analyse- und/oder Steuereinrichtung, welche dazu ausgebildet ist, die Aufnahmen des ersten Bildes und des zweiten Bildes zu steuern und/oder durch Vergleich des ersten und des zweiten Bildes, insbesondere durch Bildverarbeitung, ein Unterscheidungsmerkmal zwischen den Bildern des Zielobjektes zu extrahieren und den interessierenden Bereich zu erkennen.

Insbesondere sind sie Kamera und/oder die Beleuchtungseinrichtung und/oder die Analyse- und/oder Steuereinrichtung in einem Bauteil zusammengefasst. Dies ermöglicht eine besonders kompakte Ausbildung der Vorrichtung.

Die erfindungsgemäße Vorrichtung und ihre Ausführungsformen sind dazu ausgebildet, das erfindungsgemäße Verfahren oder die jeweiligen Ausführungsformen des Verfahrens auszuführen. Die Ausführungen zum Verfahren und zu den Ausführungsformen gelten entsprechend.

Die Erfindung wird nachfolgend lediglich beispielhaft anhand der Figuren erläutert.

Fig. 1 zeigt eine Ausführungsform der erfindungsgemäßen Vorrichtung in einer schematischen Darstellung,

Fig. 2 zeigt eine zweidimensionale Darstellung einer Hyperspektralaufnahme eines Lichtsensors,

Fig. 3 zeigt aus der Hyperspektralaufnahme der Fig. 2 extrahierte spektrale Verläufe des normierten Reflexionsvermögens,

Fig. 4 zeigt eine Auswahl eines ersten Wellenlängenbereichs und eines zweiten Wellenlängenbereichs in den spektralen Verläufen der Fig. 3,

Fig. 5A und 5B zeigen jeweils das erste Bild des Lichtsensors der Fig. 2 in dem ersten Wellenlängenbereich und das zweite Bild des Lichtsensors in dem zweiten Wellenlängenbereich,

Fig. 6 zeigt ein Differenzbild des ersten Bildes und des zweiten Bildes der Fig. 5A und 5B, und

Fig. 7 zeigt ein Ergebnis einer Schwellenwertanalyse des Differenzbildes der Fig. 6.

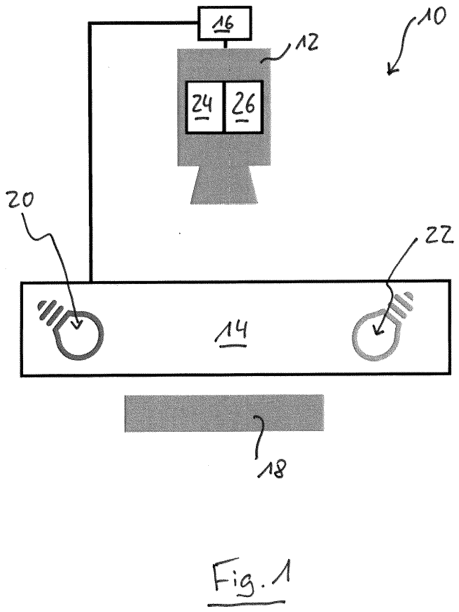

Fig. 1 zeigt eine Ausführungsform der erfindungsgemäßen Vorrichtung 10 in einer schematischen Darstellung. Die Vorrichtung 10 beinhaltet eine Kamera 12, eine Beleuchtungseinrichtung 14 und eine Analyse- und Steuereinrichtung 16. Die Beleuchtungseinrichtung 14 ist dazu ausgebildet, ein Zielobjekt 18 sequentiell mit Licht zu beleuchten, dessen Spektrum jeweils auf einen ersten Wellenlängenbereich 20 und einen zweiten Wellenlängenbereich 22 eingeschränkt ist. Die Kamera 12 ist eine Breitbildkamera, welche in dem ersten Wellenlängenbereich 20 und dem zweiten Wellenlängenbereich 22 sensitiv ist und dazu ausgebildet ist, ein erstes Bild 24 des Zielobjektes 18 in dem ersten Wellenlängenbereich 20 und ein zweites Bild 26 des Zielobjektes 18 in dem zweiten Wellenlängenbereich 22 aufzunehmen. Die Analyse- und Steuereinrichtung 16 ist mit der Kamera 12 und der Beleuchtungseinrichtung 14 verbunden und ist dazu ausgebildet, das sequentielle Beleuchten des Zielobjektes 18 und das Aufnehmen des ersten Bildes 24 und des zweiten Bildes 26 zu steuern. Hierzu kann die Analyse- und Steuereinrichtung 16 insbesondere auch in der Kamera 12 angeordnet sein. Die Analyse- und Steuereinrichtung 16 ist weiterhin dazu ausgebildet, durch Vergleich des ersten Bildes 24 und des zweiten Bildes 26 ein Unterscheidungsmerkmal zwischen den Bildern 24, 26 des Zielobjektes 18 zu extrahieren und einen interessierenden Bereich zu erkennen.

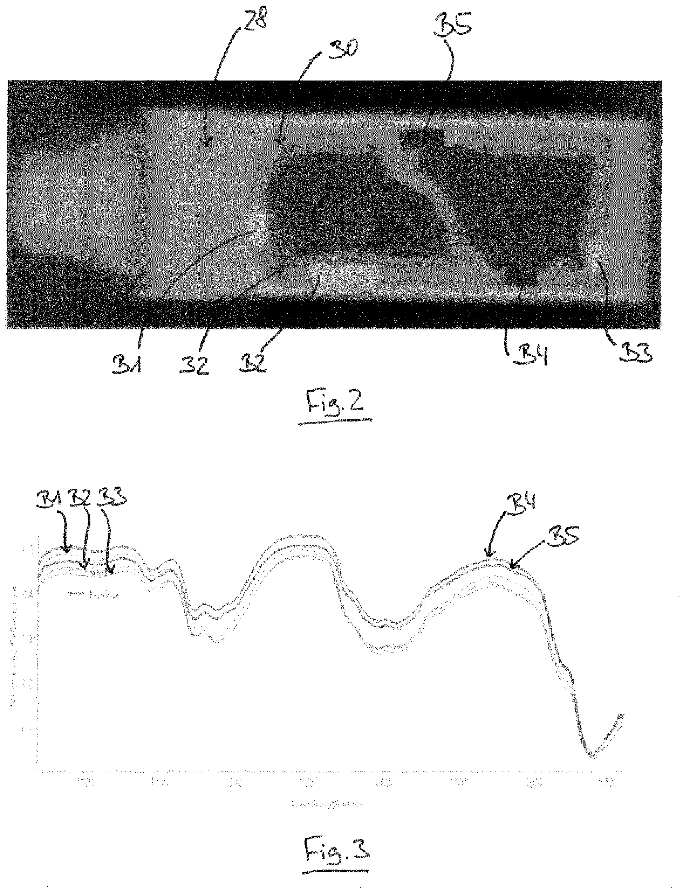

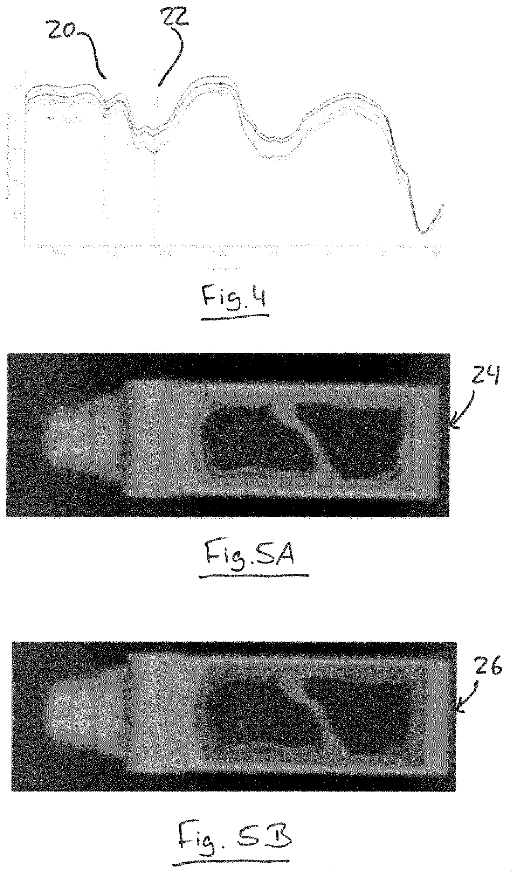

In den Fig. 2 bis 7 wird eine Ausführungsform des erfindungsgemäßen Verfahrens anhand der Überprüfung einer Klebefläche in einem Lichtsensor 28 erläutert, der ein Zielobjekt 18 der Fig. 1 darstellt. Hierbei zeigt die Fig. 2 eine zweidimensionale Darstellung einer Hyperspektralaufnahme des Lichtsensors 28, welche insbesondere eine Klebefläche 30 abbildet, mittels derer eine in der Aufnahme transparent erscheinende Abdeckung an dem Lichtsensor 28 befestigt ist. Zur Veranschaulichung des Verfahrens sind in der Hyperspektralaufnahme fünf Bereiche (B1, B2, B3, B4, B5) markiert, wobei, wie später dargelegt wird, die drei heller erscheinenden Markierungen (B1, B2, B3) Bereiche umfassen, in denen die Klebefläche 30 ordnungsgemäß ausgebildet ist und ein Klebstoff 32 an dem Lichtsensor 28 angebracht ist. Die zwei dunkleren Markierungen (B4, B5) umfassen dagegen Bereiche, in denen die Klebefläche 30 nicht ordnungsgemäß ausgebildet ist und somit kein Klebstoff 32 an dem Lichtsensor 28 angebracht ist. In diesen Bereichen zeigt die Hyperspektralaufnahme somit ausschließlich das Material des Lichtsensors 28. Die Fig. 3 zeigt für jeden der fünf markierten Bereiche (B1, B2, B3, B4, B5) die aus der Hyperspektralaufnahme der Fig. 2 extrahierten spektralen Verläufe des normierten Reflexionsvermögens. Wie aus der Fig. 3 ersichtlich ist, zeigen die spektralen Verläufe einer ersten zusammengehörenden Gruppe (b1, B2, B3) von Bereichen jeweils einen ähnlichen Verlauf, welcher sich jedoch zumindest in bestimmten Wellenlängenbereichen vom spektralen Verlauf der zweiten Gruppe (B4, B5) von Bereichen unterscheidet. Dieses Verhalten wird in dem erfindungsgemäßen Verfahren dazu benutzt, um zwischen dem Lichtsensor 28, d.h. dem Zielobjekt, und dem eine Klebefläche 30 bildenden Klebstoff 32, dem interessierenden Bereich, zu unterscheiden und den Klebstoff 32 in Bildern des Lichtsensors 28 zu erkennen. Für eine effiziente Unterscheidung wird ein erster Wellenlängenbereich 20 und ein zweiter Wellenlängenbereich 22 ausgewählt, bei denen der Intensitätsunterschied zwischen den spektralen Verläufen des Klebstoffs 32 (obere Kurven B1, B2, B3) und des Lichtsensors 28 (untere Kurven B4 und B5) jeweils minimiert bzw. maximiert ist. Die ausgewählten Wellenlängenbereiche 20 und 22 sind in Fig. 4 markiert. Der erste und der zweite Wellenlängenbereich 20 und 22 liegen jeweils zwischen 1084nm und 1088nm und zwischen 1178nm und 1182nm. Die beiden Wellenlängenbereiche 20 und 22 weisen somit gleiche Breiten (20a, 22a) auf. Die Breiten 20a, 22a der Wellenlängenbereiche 20 und 22 können sich gegebenenfalls jedoch auch unterscheiden. Die Auswahl der Wellenlängenbereiche 20 und 22 wurde hier nur zu illustrativen Zwecken an einem Bespiel gezeigt, bei welchem die Positionen von Qualitätsmängeln bereits bekannt ist. Im Allgemeinen erfolgen die Verfahrensschritte der Auswahl der Wellenlängenbereiche 20, 222 dagegen ohne ein derartiges vorheriges Wissen. Vielmehr können die spektralen Verläufe des Reflexionsvermögens für die verschiedenen Materialien, beispielsweise aus Hyperspektralaufnahmen oder auch aus Literaturdaten, separat gewonnen werden und aus den so erhaltenen Verläufen Intensitätsunterschiede ermittelt werden.

In dem erfindungsgemäßen multispektralen Verfahren werden die ausgewählten Wellenlängenbereiche 20 und 22 nun dazu benutzt, die Güte der Klebefläche 32 des Lichtsensors 28 mittels der Vorrichtung 10 der Fig. 1 zu untersuchen. Hierzu wird der Lichtsensor 28 sequentiell mit Licht des ersten Wellenlängenbereichs 20 und mit Licht des zweiten Wellenlängenbereichs 22 beleuchtet und jeweils ein erstes Bild 24 im ersten Wellenlängenbereich 20 und ein zweites Bild 26 im zweiten Wellenlängenbereich 22 aufgenommen. Die Einschränkung der Wellenlängenbereiche 20 und 22 erfolgt beleuchtungsseitig, beispielsweise durch eine geeignete Filterung des von der Beleuchtungseinrichtung 14 ausgesendeten Lichts.

Fig. 5A und Fig. 5B zeigen jeweils das durch die Kamera 12 aufgenommene erste Bild 24 und zweite Bild 26 des Lichtsensors 28 in dem ersten Wellenlängenbereich 20 und dem zweiten Wellenlängenbereich 22. Zum Identifizieren von Unterscheidungsmerkmalen 38 zwischen dem ersten Bild 24 und dem zweiten Bild 26 berechnet die Analyse- und Steuereinrichtung 16 zunächst ein normiertes Differenzbild 34 der beiden Bilder gemäß

$$\frac{(erstes\ Bild\ 24 - zweites\ Bild\ 26)}{(erstes\ Bild\ 24 + zweites\ Bild\ 26)}$$

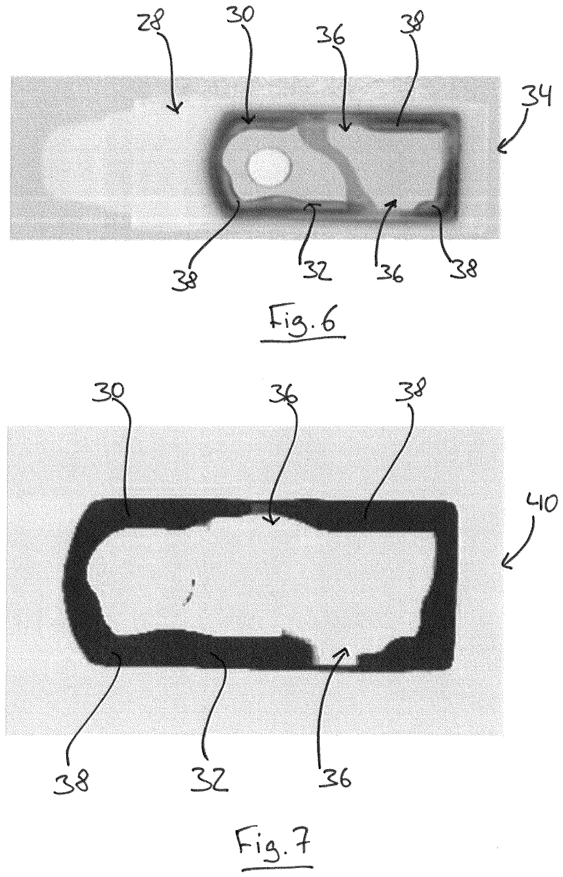

Fig. 6 zeigt das resultierende Differenzbild 34, in welchem die Klebeflächen 30 und insbesondere Fehlstellen 36 des Klebstoffs 32 klar hervortreten. Die zusammenhängenden Bereiche der Klebeflächen 30 bilden nun eine Reihe von Unterscheidungsmerkmalen 38, die von der Analyse- und Steuereinrichtung 16 in dem Differenzbild 34 identifiziert und zum Erkennen des Klebstoffs 30 und der Klebefläche 32 genutzt werden. Hierbei kann unterstützend eine Segmentierung oder eine Schwellenwertanalyse des Differenzbildes 34 angewandt werden, um den interessierenden Bereich, d.h. den Klebstoff 32 und die Klebefläche 30, möglichst vollständig zu erkennen. Fig. 7 zeigt als Ergebnisbild 40 einer Schwellenwertanalyse des Differenzbildes 34 der Fig. 6 die Ausdehnung der Klebefläche 30 und insbesondere das Auftreten und die exakte Position von Fehlstellen 36 in der Klebefläche 30, in denen kein Klebstoff 32 vorhanden ist.

Das erfindungsgemäße multispektrale Verfahren ermöglicht somit ein einfaches, effizientes, genaues und kostengünstiges Erkennen des interessierenden Bereichs 30, 32 in Bildern eines Zielobjektes 18, 28.

**Bezugszeichen**

10    Vorrichtung zum Erkennen eines interessierenden Bereichs
12    Kamera
14    Beleuchtungseinrichtung
16    Analyse- und Steuereinrichtung
18    Zielobjekt
20    erster Wellenlängenbereich
20a   Halbwertsbreite des ersten Wellenlängenbereichs
22    zweiter Wellenlängenbereich
22a   Halbwertsbreite des zweiten Wellenlängenbereichs
24    erstes Bild des Zielobjektes
26    zweites Bild des Zielobjektes
28    Lichtsensor
30    Klebefläche
32    Klebstoff
34    Differenzbild
36    Fehlstellen des Klebstoffs
38    Unterscheidungsmerkmal
40    Ergebnisbild einer Schwellenwertanalyse des Differenzbildes

**Patentansprüche**

1. Verfahren zum Erkennen eines interessierenden Bereichs (30, 32) in beispielsweise multispektralen Bildern eines Zielobjektes (18, 28) in einem industriellen Prozess, mit den Schritten:

- Auswählen einer Reihe von Wellenlängenbereichen, wobei die Reihe von Wellenlängenbereichen zumindest einen ersten Wellenlängenbereich (20) und einen zweiten Wellenlängenbereich (22) umfasst, der sich von dem ersten Wellenlängenbereich (20) unterscheidet,

wobei ein Intensitätsunterschied zwischen dem interessierenden Bereich (30, 32) und dem Zielobjekt (18, 28) in dem ersten Wellenlängenbereich (20) minimiert ist und der Intensitätsunterschied zwischen dem interessierenden Bereich (30, 32) und dem Zielobjekt (18, 28) in dem zweiten Wellenlängenbereich (22) maximiert ist,
wobei der Intensitätsunterschied zwischen dem interessierenden Bereich (30, 32) und dem Zielobjekt (18, 28) in einem Wellenlängenbereich bevorzugt definiert ist durch den Unterschied im Spektrum des interessierenden Bereichs (30, 32) und des Zielobjektes (18, 28) innerhalb des Wellenlängenbereichs,

- Aufnehmen eines ersten Bildes (24) des Zielobjektes (18, 28) in dem ersten Wellenlängenbereich (20),
- Aufnehmen eines zweiten Bildes (26) des Zielobjektes (18, 28) in dem zweiten Wellenlängenbereich (22);
- Vergleichen des ersten Bildes (24) und des zweiten Bildes (26) des Zielobjektes (18, 28), um zumindest ein Unterscheidungsmerkmal (38) zwischen den Bildern (24, 26) des Zielobjektes (18, 28) zu identifizieren; und
- Erkennen des interessierenden Bereichs (30, 32), basierend auf dem identifizierten zumindest einen Unterscheidungsmerkmal (38).

2. Verfahren nach Anspruch 1, wobei zumindest ein Wellenlängenbereich (20, 22) der Reihe von Wellenlängenbereichen, insbesondere dessen zentrale Wellenlänge, einem spezifischen Merkmal im Reflexionsspektrum beziehungsweise im Absorptionsspektrum des interessierenden Bereichs (30, 32) und/oder des Zielobjektes (18, 28) entspricht.

3. Verfahren nach Anspruch 1 oder 2, wobei die jeweiligen Wellenlängenbereiche (20, 22) der Reihe von Wellenlängenbereichen mittels einer Spektralanalyse von vorangegangenen Aufnahmen, insbesondere Hyperspektralaufnahmen, des Zielobjektes (18, 28) und des interessierenden Bereichs (30, 32) ausgewählt werden.

4. Verfahren nach einem der vorhergehenden Ansprüche, wobei die Reihe von Wellenlängenbereichen zumindest einen dritten Wellenlängenbereich umfasst, der sich von dem ersten Wellenlängenbereich (20) und dem zweiten Wellenlängenbereich (22) unterscheidet, wobei der Intensitätsunterschied zwischen einem weiteren interessierenden Bereich und dem Zielobjekt (18, 28) in dem dritten Wellenlängenbereich maximiert ist; und das Verfahren weiterhin umfasst:

- Aufnehmen eines dritten Bildes des Zielobjektes (18, 28) in dem dritten Wellenlängenbereich; und

- Vergleichen des ersten und dritten Bildes des Zielobjektes (18, 28) und/oder des zweiten und dritten Bildes des Zielobjektes (18, 28), um zumindest ein weiteres Unterscheidungsmerkmal zwischen den Bildern des Zielobjektes (18, 28) zu identifizieren; und

- Erkennen des weiteren interessierenden Bereichs, basierend auf dem identifizierten zumindest einen weiteren Unterscheidungsmerkmal.

5. Verfahren nach einem der vorhergehenden Ansprüche, wobei das Aufnehmen der Bilder (24, 26) des Zielobjekts durch eine Kamera (12) erfolgt, welche für jeden Wellenlängenbereich (20, 22) der Reihe von Wellenlängenbereichen sensitiv ist, insbesondere wobei die Kamera (12) eine Breitbandkamera ist.

6. Verfahren nach einem der vorhergehenden Ansprüche, wobei zumindest eine Beleuchtungseinrichtung (14) vorgesehen ist, welche das Zielobjekt (18, 28) während dem Aufnehmen von jeweiligen Bildern (24, 26) des Zielobjektes (18, 28) sequentiell mit Licht beleuchtet, dessen Spektrum jeweils auf einen Wellenlängenbereich (20, 22) der Reihe von Wellenlängenbereichen eingeschränkt ist.

7. Verfahren nach einem der vorhergehenden Ansprüche, wobei zumindest eine Beleuchtungseinrichtung (14) vorgesehen ist, welche das Zielobjekt (18, 28) während dem Aufnehmen von jeweiligen Bildern (24, 26) des Zielobjektes (18, 28) mit im Wesentlichen weißen Licht beleuchtet und eine Filtereinrichtung vorgesehen ist, welche zumindest zwei Filterelemente umfasst, die jeweils im Wesentlichen für Licht eines Wellenlängenbereichs (20, 22) der Reihe von Wellenlängenbereichen durchlässig und für Licht anderer Wellenlängen undurchlässig sind und das von dem Zielobjekt (18, 28) und von dem interessierenden Bereich (30, 32) reflektierte Licht derart filtern, dass das Aufnehmen der Bilder (24, 26) des Zielobjektes (18, 28) in dem jeweiligen eingeschränkten Wellenlängenbereich (20, 22) erfolgt.

8. Verfahren nach einem der vorhergehenden Ansprüche, wobei eine Analyse- und/oder Steuereinrichtung (16) vorgesehen ist, welche dazu ausgebildet ist, das Aufnehmen der Bilder (24, 26) des Zielobjektes (18, 28) zu steuern und/oder durch Vergleich der Bilder (24, 26) des Zielobjektes (18, 28), insbesondere durch Bildverarbeitung, ein Unterscheidungsmerkmal (38) zwischen den Bildern (24, 26) des Zielobjektes (18, 28) zu identifizieren und den interessierenden Bereich (30, 32) zu erkennen, insbesondere wobei die Analyse- und/oder Steuereinrichtung (16) in der Kamera (12) angeordnet ist.

9. Verfahren nach Anspruch 8, wobei das Vergleichen des ersten und zweiten Bildes (24, 26) das Erzeugen zumindest eines Differenzbildes (34) beinhaltet und das Identifizieren des zumindest einen Unterscheidungsmerkmals (38) in dem Differenzbild (34) erfolgt.

10. Verfahren nach einem der vorhergehenden Ansprüche, wobei Halbwertsbreiten (20a, 22a) der jeweiligen Wellenlängenbereiche (20, 22) der Reihe von Wellenlängenbereichen gleich groß sind oder unterschiedlich groß sind, und wobei die Halbwertsbreite (20a, 22a) zumindest eines der Wellenlängenbereiche der Reihe von Wellenlängenbereichen kleiner ist als 100 nm.

11. Verfahren nach einem der vorhergehenden Ansprüche, wobei der interessierende Bereich (30, 32) überall aus demselben Material besteht.

12. Verfahren nach einem der vorhergehenden Ansprüche, wobei der weitere interessierende Bereich aus einem anderen Material besteht als der interessierende Bereich (30, 32).

13. Vorrichtung (10) zum Erkennen eines interessierenden Bereichs (30, 32) mittels multispektraler Bildgebung in einem industriellen Prozess, wobei die Vorrichtung (10) dazu ausgebildet ist, die folgenden Schritte auszuführen:

- Aufnehmen eines ersten Bildes (24) eines Zielobjektes (30, 32) in einem ersten Wellenlängenbereich (20);
- Aufnehmen zumindest eines zweiten Bildes (26) des Zielobjektes (18, 28) in zumindest einem zweiten Wellenlängenbereich (22), der sich vom ersten Wellenlängenbereich (20) unterscheidet,

wobei ein Intensitätsunterschied zwischen dem interessierenden Bereich (30, 32) und dem Zielobjekt (18, 28) in einem Wellenlängenbereich bevorzugt definiert ist durch den Unterschied im Spektrum des interessierenden Bereichs (30, 32) und des Zielobjektes (18, 28), wobei der Intensitätsunterschied zwischen dem interessierenden Bereich (30, 32) und dem Zielobjekt (18, 28) in dem ersten Wellenlängenbereich (20) minimiert ist und der Intensitätsunterschied zwischen dem interessierenden Bereich (30, 32) und dem Zielobjekt (18, 28) in dem zweiten Wellenlängenbereich (22) maximiert ist;

- Vergleichen des ersten Bildes (24) und des zweiten Bildes (26) des Zielobjektes (18, 28), um zumindest ein Unterscheidungsmerkmal (38) zwischen den Bildern (24, 26) des Zielobjektes (18, 28) zu identifizieren; und
- Erkennen des interessierenden Bereichs (30, 32), basierend auf dem identifizierten zumindest einen Unterscheidungsmerkmal (38).

14. Vorrichtung nach Anspruch 13, weiterhin umfassend:

eine Kamera (12), insbesondere Breitbandkamera, welche in dem ersten und dem zweiten Wellenlängenbereich (20, 22) sensitiv ist und dazu ausgebildet ist, das erste Bild (24) und das zweite Bild (26) des Zielobjektes (18, 28) aufzunehmen;

zumindest eine Beleuchtungseinrichtung (14), welche dazu ausgebildet ist, das Zielobjekt (18, 28) mit im Wesentlichen weißen Licht und/oder sequentiell mit Licht zu beleuchten, dessen Spektrum jeweils auf den ersten und den zweiten Wellenlängenbereich (20, 22) eingeschränkt ist; und

eine Analyse- und/oder Steuereinrichtung (16), welche dazu ausgebildet ist, die Aufnahmen des ersten und des zweiten Bildes (24, 26) zu steuern und/oder durch Vergleich des ersten und des zweiten Bildes (24, 26), insbesondere durch Bildverarbeitung, das Unterscheidungsmerkmal (38) zwischen den Bildern (24, 26) des Zielobjektes zu extrahieren und den interessierenden Bereich (30, 32) zu erkennen.

15. Vorrichtung nach Anspruch 14, wobei die Kamera (12) und/oder die Beleuchtungseinrichtung (14) und/oder die Analyse- und/ oder Steuereinrichtung (16) in einem Bauteil zusammengefasst sind.

**Geänderte Patentansprüche gemäss Regel 137(2) EPÜ.**

1. Verfahren zum Erkennen eines interessierenden Bereichs (30, 32) in beispielsweise multispektralen Bildern eines Zielobjektes (18, 28) in einem industriellen Prozess, mit den Schritten:

- Auswählen einer Reihe von Wellenlängenbereichen, wobei die Reihe von Wellenlängenbereichen zumindest einen ersten Wellenlängenbereich (20) und einen zweiten Wellenlängenbereich (22) umfasst, der sich von dem ersten Wellenlängenbereich (20) unterscheidet,
- Aufnehmen eines ersten Bildes (24) des Zielobjektes (18, 28) in dem ersten Wellenlängenbereich (20),
- Aufnehmen eines zweiten Bildes (26) des Zielobjektes (18, 28) in dem zweiten Wellenlängenbereich (22);
- Vergleichen des ersten Bildes (24) und des zweiten Bildes (26) des Zielobjektes (18, 28), um zumindest ein Unterscheidungsmerkmal (38) zwischen den Bildern (24, 26) des Zielobjektes (18, 28) zu identifizieren; und
- Erkennen des interessierenden Bereichs (30, 32), basierend auf dem identifizierten zumindest einen Unterscheidungsmerkmal (38),
**dadurch gekennzeichnet, dass**
ein Intensitätsunterschied zwischen dem interessierenden Bereich (30, 32) und dem Zielobjekt (18, 28) in einem Wellenlängenbereich definiert ist durch den Unterschied im Spektrum des interessierenden Bereichs (30, 32) und des Zielobjektes (18, 28) innerhalb des Wellenlängenbereichs, und der erste Wellenlängenbereich (20) und der zweite Wellenlängenbereich (22) derart ausgewählt werden, dass ein Intensitätsunterschied zwischen dem interessierenden Bereich (30, 32) und dem Zielobjekt (18, 28) in dem ersten Wellenlängenbereich (20) minimiert ist und der Intensitätsunterschied zwischen dem interessierenden Bereich (30, 32) und dem Zielobjekt (18, 28) in dem zweiten Wellenlängenbereich (22) maximiert ist.

2. Verfahren nach Anspruch 1, wobei zumindest ein Wellenlängenbereich (20, 22) der Reihe von Wellenlängenbereichen, insbesondere dessen zentrale Wellenlänge, einem spezifischen Merkmal im Reflexionsspektrum beziehungsweise im Absorptionsspektrum des interessierenden Bereichs (30, 32) und/oder des Zielobjektes (18, 28) entspricht.

3. Verfahren nach Anspruch 1 oder 2, wobei die jeweiligen Wellenlängenbereiche (20, 22) der Reihe von Wellenlängenbereichen mittels einer Spektralanalyse von vorangegangenen Aufnahmen, insbesondere Hyperspektralaufnahmen, des Zielobjektes (18, 28) und des interessierenden Bereichs (30, 32) ausgewählt werden.

4. Verfahren nach einem der vorhergehenden Ansprüche, wobei die Reihe von Wellenlängenbereichen zumindest einen dritten Wellenlängenbereich umfasst, der sich von dem ersten Wellenlängenbereich (20) und dem zweiten Wellenlängenbereich (22) unterscheidet, wobei der Intensitätsunterschied zwischen einem weiteren interessierenden Bereich und dem Zielobjekt (18, 28) in dem dritten Wellenlängenbereich maximiert ist; und das Verfahren weiterhin umfasst:

- Aufnehmen eines dritten Bildes des Zielobjektes (18, 28) in dem dritten Wellenlängenbereich; und

- Vergleichen des ersten und dritten Bildes des Zielobjektes (18, 28) und/oder des zweiten und dritten Bildes des Zielobjektes (18, 28), um zumindest ein weiteres Unterscheidungsmerkmal zwischen den Bildern des Zielobjektes (18, 28) zu identifizierten; und

- Erkennen des weiteren interessierenden Bereichs, basierend auf dem identifizierten zumindest einen weiteren Unterscheidungsmerkmal.

5. Verfahren nach einem der vorhergehenden Ansprüche, wobei das Aufnehmen der Bilder (24, 26) des Zielobjekts durch eine Kamera (12) erfolgt, welche für jeden Wellenlängenbereich (20, 22) der Reihe von Wellenlängenbereichen sensitiv ist, insbesondere wobei die Kamera (12) eine Breitbandkamera ist.

6. Verfahren nach einem der vorhergehenden Ansprüche, wobei zumindest eine Beleuchtungseinrichtung (14) vorgesehen ist, welche das Zielobjekt (18, 28) während dem Aufnehmen von jeweiligen Bildern (24, 26) des Zielobjektes (18, 28) sequenziell mit Licht beleuchtet, dessen Spektrum jeweils auf einen Wellenlängenbereich (20, 22) der Reihe von Wellenlängenbereichen eingeschränkt ist.

7. Verfahren nach einem der vorhergehenden Ansprüche, wobei zumindest eine Beleuchtungseinrichtung (14) vorgesehen ist, welche das Zielobjekt (18, 28) während dem Aufnehmen von jeweiligen Bildern (24, 26) des Zielobjektes (18, 28) mit im Wesentlichen weißen Licht beleuchtet und eine Filtereinrichtung vorgesehen ist, welche zumindest zwei Filterelemente umfasst, die jeweils im Wesentlichen für Licht eines Wellenlängenbereichs (20, 22) der Reihe von Wellenlängenbereichen durchlässig und für Licht anderer Wellenlängen undurchlässig sind und das von dem Zielobjekt (18, 28) und von dem interessierenden Bereich (30, 32) reflektierte Licht derart filtern, dass das Aufnehmen der Bilder (24, 26) des Zielobjektes (18, 28) in dem jeweiligen eingeschränkten Wellenlängenbereich (20, 22) erfolgt.

8. Verfahren nach einem der vorhergehenden Ansprüche, wobei eine Analyse- und/oder Steuereinrichtung (16) vorgesehen ist, welche dazu ausgebildet ist, das Aufnehmen der Bilder (24, 26) des Zielobjektes (18, 28) zu steuern und/oder durch Vergleich der Bilder (24, 26) des Zielobjektes (18, 28), insbesondere durch Bildverarbeitung, ein Unterscheidungsmerkmal (38) zwischen den Bildern (24, 26) des Zielobjektes (18, 28) zu identifizieren und den interessierenden Bereich (30, 32) zu erkennen, insbesondere wobei die Analyse- und/oder Steuereinrichtung (16) in der Kamera (12) angeordnet ist.

9. Verfahren nach Anspruch 8, wobei das Vergleichen des ersten und zweiten Bildes (24, 26) das Erzeugen zumindest eines Differenzbildes (34) beinhaltet und das Identifizieren des zumindest einen Unterscheidungsmerkmals (38) in dem Differenzbild (34) erfolgt.

10. Verfahren nach einem der vorhergehenden Ansprüche, wobei Halbwertsbreiten der jeweiligen Wellenlängenbereiche (20, 22) der Reihe von Wellenlängenbereichen gleich groß sind oder unterschiedlich groß sind, und wobei die Halbwertsbreite zumindest eines der Wellenlängenbereiche der Reihe von Wellenlängenbereichen kleiner ist als 100 nm.

11. Verfahren nach einem der vorhergehenden Ansprüche, wobei der interessierende Bereich (30, 32) überall aus demselben Material besteht.

12. Verfahren nach einem der vorhergehenden Ansprüche, wobei der weitere interessierende Bereich aus einem anderen Material besteht als der interessierende Bereich (30, 32).

13. Vorrichtung (10) zum Erkennen eines interessierenden Bereichs (30, 32) mittels multispektraler Bildgebung in einem industriellen Prozess, wobei die Vorrichtung (10) dazu ausgebildet ist, die folgenden Schritte auszuführen:

- Aufnehmen eines ersten Bildes (24) eines Zielobjektes (30, 32) in einem ersten Wellenlängenbereich (20);
- Aufnehmen zumindest eines zweiten Bildes (26) des Zielobjektes (18, 28) in zumindest einem zweiten Wellenlängenbereich (22), der sich vom ersten Wellenlängenbereich (20) unterscheidet,
- Vergleichen des ersten Bildes (24) und des zweiten Bildes (26) des Zielobjektes (18, 28), um zumindest ein Unterscheidungsmerkmal (38) zwischen den Bildern (24, 26) des Zielobjektes (18, 28) zu identifizieren; und
- Erkennen des interessierenden Bereichs (30, 32), basierend auf dem identifizierten zumindest einen Unterscheidungsmerkmal (38),
**dadurch gekennzeichnet, dass**
ein Intensitätsunterschied zwischen dem interessierenden Bereich (30, 32) und dem Zielobjekt (18, 28) in einem Wellenlängenbereich definiert ist durch den Unterschied im Spektrum des interessierenden Bereichs (30, 32) und des Zielobjektes (18, 28), und der erste Wellenlängenbereich (20) und der zweiten Wellenlängenbereich (22) derart gewählt sind, dass der Intensitätsunterschied zwischen dem interessierenden Bereich (30, 32) und dem Zielobjekt (18, 28) in dem ersten Wellenlängenbereich (20) minimiert ist und der Intensitätsunterschied zwischen dem interessierenden Bereich (30, 32) und dem Zielobjekt (18, 28) in dem zweiten Wellenlängenbereich (22) maximiert ist.

14. Vorrichtung nach Anspruch 13, weiterhin umfassend:

eine Kamera (12), insbesondere Breitbandkamera, welche in dem ersten und dem zweiten Wellenlängenbereich (20, 22) sensitiv ist und dazu ausgebildet ist, das erste Bild (24) und das zweite Bild (26) des Zielobjektes (18, 28) aufzunehmen;
zumindest eine Beleuchtungseinrichtung (14), welche dazu ausgebildet ist, das Zielobjekt (18, 28) mit im Wesentlichen weißen Licht und/oder sequentiell mit Licht zu beleuchten, dessen Spektrum jeweils auf den ersten und den zweiten Wellenlängenbereich (20, 22) eingeschränkt ist; und
eine Analyse- und/oder Steuereinrichtung (16), welche dazu ausgebildet ist, die Aufnahmen des ersten und des zweiten Bildes (24, 26) zu steuern und/oder durch Vergleich des ersten und des zweiten Bildes (24, 26), insbesondere durch Bildverarbeitung, das Unterscheidungsmerkmal (38) zwischen den Bildern (24, 26) des Zielobjektes zu extrahieren und den interessierenden Bereich (30, 32) zu erkennen.

15. Vorrichtung nach Anspruch 14, wobei die Kamera (12) und/oder die Beleuchtungseinrichtung (14) und/oder die Analyse- und/ oder Steuereinrichtung (16) in einem Bauteil zusammengefasst sind.

Fig. 1

Fig.2

Fig.3

Fig.4

Fig.5A

Fig.5B

Fig. 6

Fig. 7

EUROPÄISCHES PATENTAMT
European Patent Office
Office européen des brevets

# EUROPÄISCHER RECHERCHENBERICHT

**Nummer der Anmeldung**

EP 24 17 7150

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 4 296 638 A1 (FUJIFILM CORP [JP]) 27. Dezember 2023 (2023-12-27) * Absätze [0038] - [0071]; Abbildungen 1-6 * * Absatz [0120]; Abbildung 17 * * Absatz [0170] * ----- | 1-15 | INV. G01N21/31 G06V10/143 G01J3/02 ADD. G01N21/88 |
| X | US 2024/029337 A1 (PARKER IAN DAVID [US] ET AL) 25. Januar 2024 (2024-01-25) * Absätze [0001], [0030] - [0032] * * Absätze [0039] - [0044]; Abbildungen 1-4 * ----- | 1-15 | |
| X | EP 4 162 862 A1 (KONINKLIJKE PHILIPS NV [NL]) 12. April 2023 (2023-04-12) * Absätze [0009] - [0010], [0038] * * Absätze [0040] - [0053]; Abbildungen 6,8A,8B * ----- | 1-15 | |
| A | WO 2013/037495 A1 (AMCOR FLEXIBLES ITALIA S R L [IT]; ORSINI LORENZO MARIA [IT]) 21. März 2013 (2013-03-21) * Zusammenfassung * ----- | 1-15 | RECHERCHIERTE SACHGEBIETE (IPC) G01N G06V |
| A | EP 0 314 012 A2 (MARTIN BERNHARD DIPL ING [DE]) 3. Mai 1989 (1989-05-03) * Zusammenfassung * ----- | 1-15 | |

Der vorliegende Recherchenbericht wurde für alle Patentansprüche erstellt

| Recherchenort | Abschlußdatum der Recherche | Prüfer |
|---|---|---|
| München | 30. Oktober 2024 | Consalvo, Daniela |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

30-10-2024

| Im Recherchenbericht angeführtes Patentdokument | Datum der Veröffentlichung | Mitglied(er) der Patentfamilie | Datum der Veröffentlichung |
|---|---|---|---|
| EP 4296638 A1 | 27-12-2023 | CN 116806304 A | 26-09-2023 |
| | | EP 4296638 A1 | 27-12-2023 |
| | | JP WO2022163671 A1 | 04-08-2022 |
| | | US 2023370700 A1 | 16-11-2023 |
| | | WO 2022163671 A1 | 04-08-2022 |
| US 2024029337 A1 | 25-01-2024 | US 2024029337 A1 | 25-01-2024 |
| | | WO 2024019327 A1 | 25-01-2024 |
| EP 4162862 A1 | 12-04-2023 | CN 118076286 A | 24-05-2024 |
| | | EP 4162862 A1 | 12-04-2023 |
| | | EP 4412513 A1 | 14-08-2024 |
| | | JP 2024536397 A | 04-10-2024 |
| | | WO 2023057299 A1 | 13-04-2023 |
| WO 2013037495 A1 | 21-03-2013 | BR 112014006070 A2 | 11-04-2017 |
| | | EP 2570260 A1 | 20-03-2013 |
| | | EP 2755820 A1 | 23-07-2014 |
| | | PL 2755820 T3 | 30-06-2017 |
| | | RU 2565213 C1 | 20-10-2015 |
| | | US 2015027618 A1 | 29-01-2015 |
| | | WO 2013037495 A1 | 21-03-2013 |
| EP 0314012 A2 | 03-05-1989 | DE 3736725 A1 | 11-05-1989 |
| | | EP 0314012 A2 | 03-05-1989 |

Für nähere Einzelheiten zu diesem Anhang : siehe Amtsblatt des Europäischen Patentamts, Nr.12/82

EPO FORM P0461